# EUROPEAN PATENT SPECIFICATION

(11) **EP 0 402 233 B1**
(45) Date of publication and mention of the grant of the patent: **31.08.1994**
(21) Application number: 90401513.8
(22) Date of filing: 05.06.1990
(51) Int. Cl.: C09K 19/20, C07C 69/90, C07C 69/94

(54) **Liquid crystal compounds**
Flüssigkristallverbindungen
Composés liquides cristallins

(30) Priority: 06.06.1989 JP 143472/89
(43) Date of publication of application: 12.12.1990
(73) Proprietor: Showa Shell Sekiyu Kabushiki Kaisha, Tokyo (JP)
(72) Inventor: Suzuki, Yoshiichi, c/o Showa Shell Sekiyu K.K., Tokyo 100 (JP); Mogamiya, Hiroyuki, c/o Showa Shell Sekiyu K.K., Tokyo 100 (JP); Kawamura, Ichiro, c/o Showa Shell Sekiyu K.K., Tokyo 100 (JP)
(74) Representative: Bourgognon, Jean-Marie

(56) References cited:
- EP-A- 0 327 349
- PATENT ABSTRACTS OF JAPAN, vol. 13, no. 174 (C-589)[3522], 25th April 1989; & JP-A-64 3154
- LIQUID CRYSTALS, vol. 6, no. 2, 1989, pages 167-174, Taylor and Francis Ltd, London, GB; Y. SUZUKI et al.: "New fluorine-containing ferroelectric liquid crystal compounds showing tristable switching"
- PATENT ABSTRACTS OF JAPAN, vol. 14, no. 254 (C-724)[4197], 31st May 1990; & JP-A-2 73 041

## Description

The present invention relates to ferroelectric chiral smectic liquid crystal compounds which are used for an indicative element or a photoelectric element utilizing response to an electric field. Furthermore, the present invention relates to ferroelectric liquid crystal compounds having three stable molecular orientations which are also used for an indicative element or a photoelectric element utilizing response to an electric field.

There are electrooprical devices which employ nematic liquid crystals such as DSM, TN, G-H and STN. Useful applications of these devices are restricted, since response speed is as small as a few meter second to some ten meter second. This is due to the fact that torque for moving molecules is not so large, since the torque is mainly based on anisotrophy of permittivity. Ferroelectric liquid crystals have been proposed which have response speed as large as a few j1. second to some ten µ, second and have large torque on the basis of Ps x E where Ps is a spontaneous polarization and E is an applied electric field (Meyer et al, Le Journal de Physique 36, 1975, L-69). Furthermore, there is proposed another ferroelectric liquid crystal (JP 63-307837) which is silent on ternary tristable state hereinafter referred to.

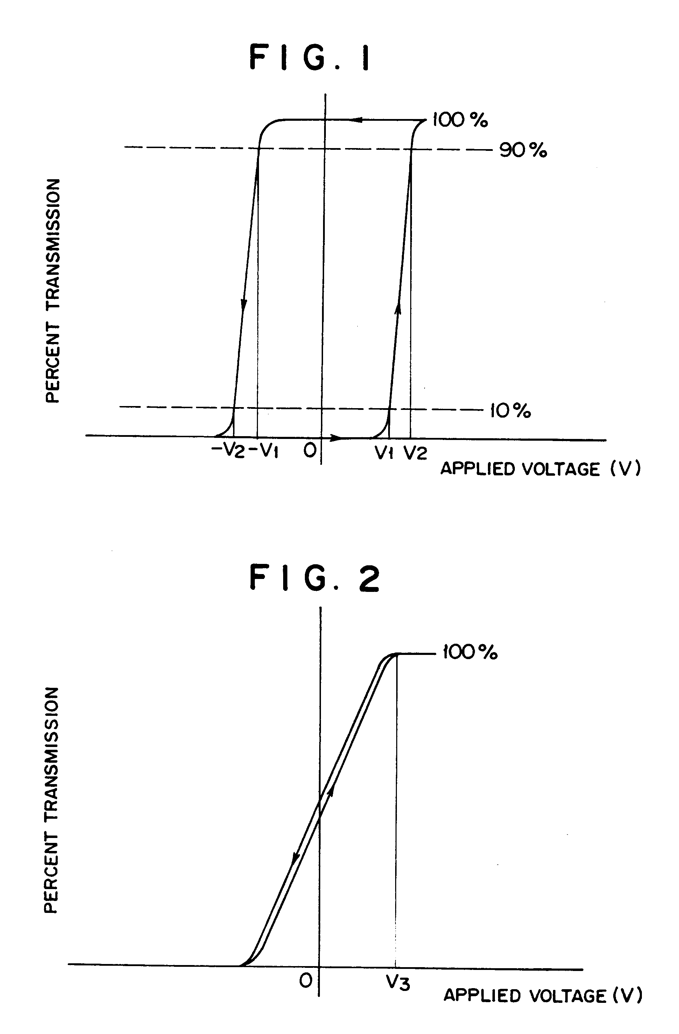

One of high speed electrooptical devices which employ ferroelectric liquid crystals is that where a helical structure is released by wall force and a change is brought about in two molecular orientations which become parallel to the wall by use of polarity of applied electric fields (JP 56-107216). This is based on a premise that there is a compound having an ideal binary bistable state which show such electric field response wave as shown in Fig. 1. However, compounds which have been actually synthesized have no such electric field response wave as in Fig. 1 but they exhibited the response as shown in Fig. 2. When a compound having response wave as in Fig. 2 is used, for instance, in a switching circuit of light, desired result is hardly obtained by only a change in applied electric voltage between "ON" and "OFF", since percent transmission slowly changes according to the change of applied electric voltage from a 0 side to a 0+ side. In addition, binary bistable liquid crystals which have been synthesized hardly form a monodomain texture, i.e., an ideal molecular orientation at Sc* phase stage where no electric field is applied to, but cause disclination or twist or irregularity in molecular orientation. It is very difficult to have ideal binary bistable orientation expressed in a large area. Another difficulty is that decrease in contrast or narrowing a field of view often appears in dynamic driving, since threshold voltage where luminance varies at a given level is small. The other difficulty is that there is no memory effect, since the binary bistable state liquid crystals actually synthesized have no hysteresis as in Fig. 1 but that as in Fig. 2. It is necessary to apply electric voltage of v3 in Fig. 2 throughout or to apply high frequency throughout, in order to have liquid crystals maintained stable response at Sc* phase. Both lose a large amount of energy. Although high speed electrooptical devices liquid crystals are expected where strong combination between applied electric fields and molecular orientation brought about from ferroelectric liquid crystals is employed, any conventional devices leave many problems unsolved.

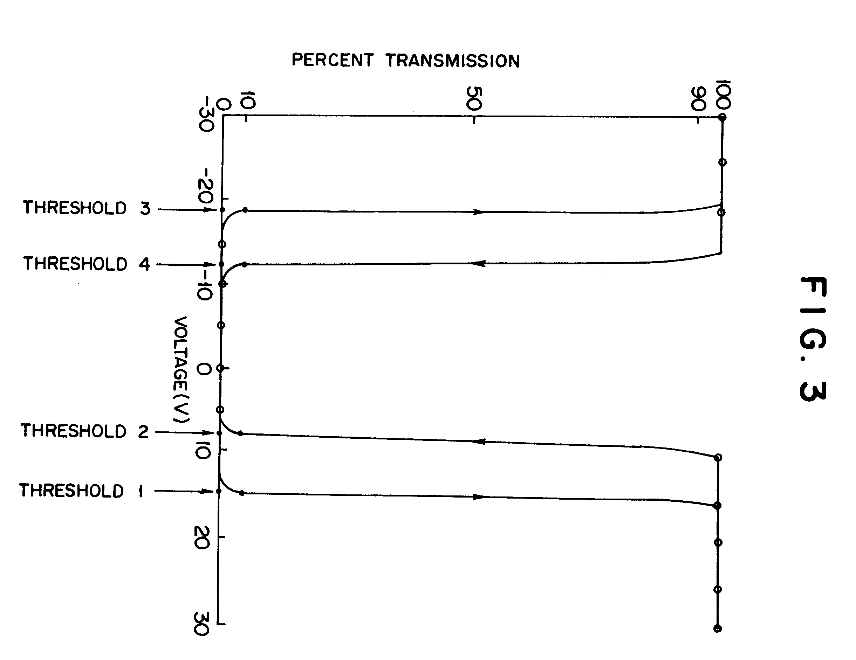

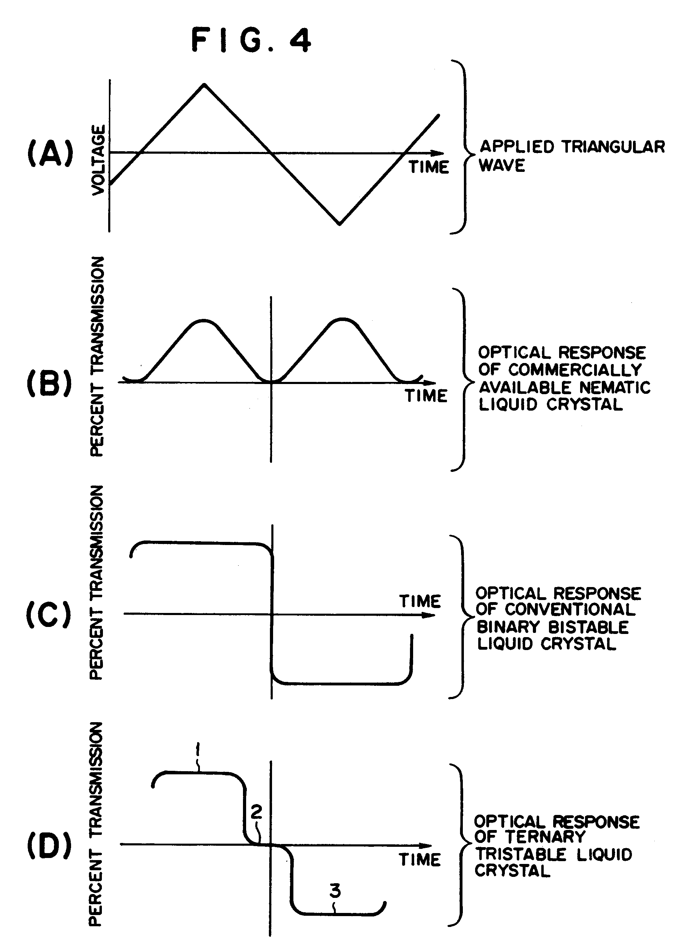

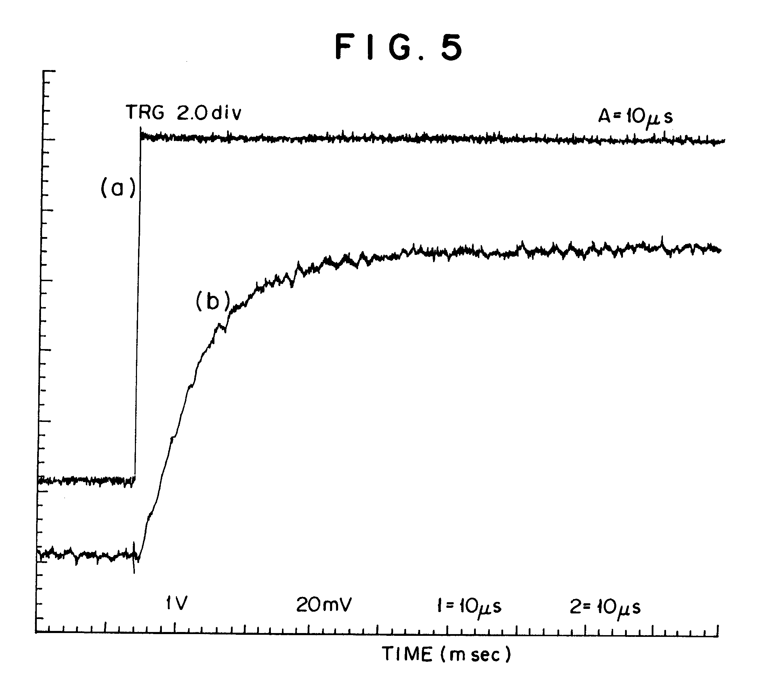

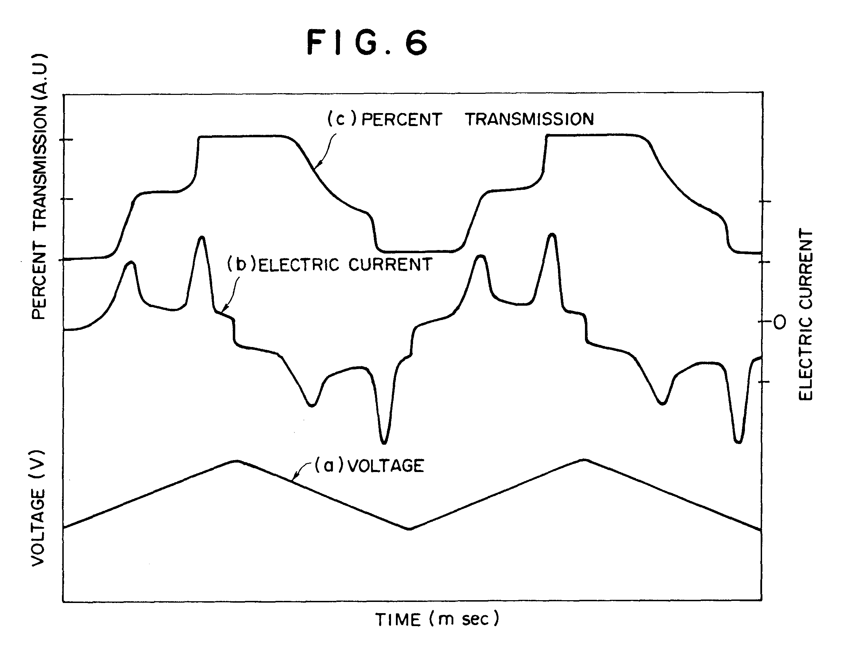

In the accompanying drawings, Figure 1 is an ideal but hypothetical hysteresis of binary bistable liquid crystals which have not yet been obtained, Figure 2 is hysteresis of binary bistable liquid crystals actually prepared, Figure 3 is hysteresis of the present ternary tristable crystals, where in Figures 1 to 3, a horizontal axis and a vertical axis show applied voltage and percent transmission (%), respectively, in Figure 4, A is applied triangular wave and B, C and D are optical response features of commercially available nematic liquid crystals, binary bistable liquid crystals which had been prepared and the present ternary tristable liquid crystals, respectively. Figure 5 shows electroclinic effect, wherein (a) is AC voltage and (b) is change of percent light transmission against the AC voltage (a) above, Figure 6 is ternary tristable state switching of the present compound, wherein (a) is triangular wave voltage applied to a liquid crystal electrooptical element, (b) is polarization reversal current and (c) is change of prcent light transmission against the triangular wave voltage(a).

The present invention provides novel liquid crystal compounds which are used in liquid crystal electrooptical devices employing a ternary tristable liquid crystals. The devices are able to show stable molecular orientation which expresses clear contrast in a field where no electric voltage is applied to, clear threshold and clear hysteresis as in Figure 3. The devices are also ready to allow dynamic drive and make it possible to respond at high speed.

A feature of the recent novel ferroelectric liquid crystals lies in a novel ternary tristable state which is greatly far from a bistable state chiral smectic C phase or Sc* phase. The teranry tristable state herein referred to means that, when voltage in the form of a triangular wave as in Fig. 4 A is applied to liquid crystal electrooptical devices where ferroelectric liquid crystals are laid between the first electrode substrate plate and the second electrode substrate plates which is apart at a given space from the first one and electric voltage for electric field is applied to the both electrode substrate plates, the second stable state in Fig. 4 D, 1 which is different from the first stable state in Fig. 4 D, 2 appears in one of the directions of electric field and the third stable state in Fig. 4 D, 3 which is different from the second as well as the first stable state appears in the other direction of electric field (JP 63-70212). On the other hand, commercially available conventional nematic liquid crystals and binary bistable state liquid crystals do not have such three stable states as in Fig. 4 (B) and (C).

The present ternary tristable state ferroelectric liquid crystals display an epoch-making effect in view of the conventional nematic liquid crystals. A process for preparing the former is simple and not expensive and a display having a large size can be produced. All necessary for the former is a simple matrix indicative element. On the other hand, the latter conventional nematic liquid crystals need such a greatly complex system as active matrix and complex and expensive processes. A display of large size is hardly produced.

According to the present invention, a liquid crystal compound as defined in claims 1, 2 or 3 is provided.

Preferable alkyl groups represented by Ra and Rb have from 3 to 16 carbon atoms. Z is preferably CF₃.

Preferable compounds are 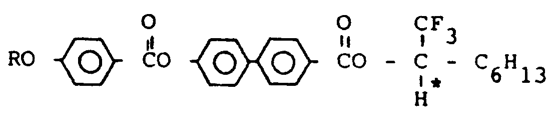 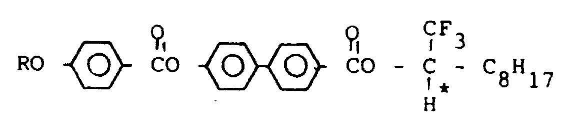 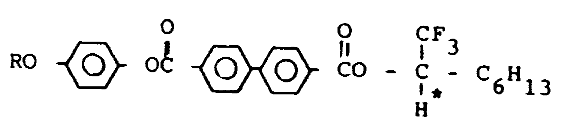 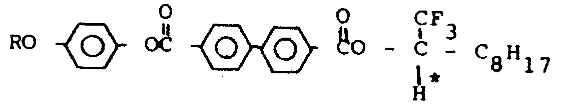 wherein R is a Ca-, alkyl group.

### Synthesis of the compounds

### (1) Optical active 4-(1,1,1-trifluoro-2-alkyloxycarbonyl)phenyl 4-n-alkyloxybenzoate

4-Benzyloxybenzoic acid chloride is allowed to react with optically active 1,1,1-trifluoro-2-alkanol to prepare 1,1,1-trifluoro-2-alkyl 4-benzyloxybenzoate which is subjected to hydrogenation to obtain 1,1,1-trifluoro-2-alkyl 4-hydroxybenzoate. The alkyl ester is then allowed to react with 4-n-alkyloxyphenyl carboxylic acid chloride to obtain the titled compound.

The following examples explain the present invention.

### Example 1

### 1) Synthesis of 1,1,1-trifluoro-2-decyl-4-benzyloxybenzoate

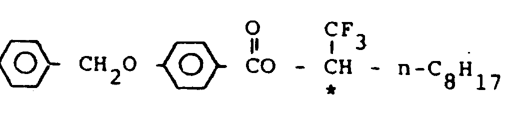

To a solution of 4-benzyloxybenzoic acid chloride (1.23 g) in methylene chloride (10 ml) was added by little and little under ice-cooling a solution of optically active 1,1,1-trifluoro-2-decanol (0.96 g), dimethylaminopyridine (0.55 g) and triethylamine (0.48 g) in methylene chloride (20 ml). The mixture was left to stand overnight at room temperature in order to effect a reaction before the mixture obtained was poured in ice-water. Extraction was effected with methylene chloride and the extracted phase was washed with dilute aqueous hydrochloric acid solution, water, 1N aqueous sodium carbonate solution and water in due order before it was dried over anhydrous magnesium sulfate. The solvent was distilled off to obtain a crude product which was purified by toluene/silica gel column chromatography and further recrystallized from ethanol to obtain the titled compound (1.84 g).

### 2) Synthesis of 1,1,1-trifluoro-2-decyl-4-hydroxybenzoate

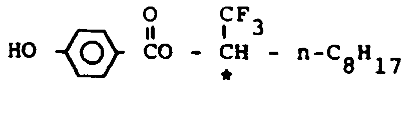

A solution of the compound obtained in 1) in ethanol (15 ml) was subjected to hydrogenation under hydrogen atmosphere in the presence of 10 % Pd on carbon (0.36 g) to obtain the titled compound (1.43 g)^{.}

The phase transition temperatures were measured by DSC and hot stage microscope-observation. Herein S^{*}(3) means phase of ternary tristable state.

### Example 14

### 4'-(1,1,1-trifluor-2-octyloxycarbonyl)biphenyl-(4) 4-n-octyloxybenzoate

4-(1,1,1-trifluoro-2-octyloxycarbonyl)-4'-hydroxybiphenyl (0.5 g) was allowed to react with n-4-octylox- ybenzoic acid (0.33 g) in the presence of dicyclocarbodiimide (0.3 g), a few pieces of dimethylaminopyridine and tetrahydrofuran (30 ml) to obtain a crude product (0.4 g), which was purified by silica gel column chromatography (hexane:ethyl acetate = 10:0.5) and then recrystallized from ethanol to obtain optically active titled compound (0.4 g).

Specific rotation [a]8° = 39.2

Phase transition temperature

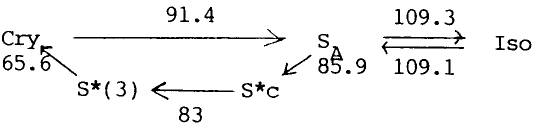

### Example 15

### 4-n-octyloxyphenyl 4'-(1,1,1-trifluoro-2-octyloxycarbonyl)biphenyl-4-carboxylate

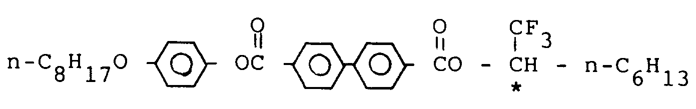

To a solution of 4,4'-biphenyldicarboxylic acid dichloride (1.3 g) and 4-n-octoxyphenol (1.0 g) in methylene chloride (40 ml) were added triethylamine (0.5 g) and dimethylaminopyridine (0.032 g). The mixture was stirred for 24 hours at room temperature before it was poured in water. Extraction was made with methylene chloride and the extract was washed with dilute aqueous hydrochloric acid solution, water, dilute aqueous sodium carbonate solution and water, in due order, and dried over anhydrous magnesium sulfate. After the solvent was distilled off, the residue was purified by silica gel column chromatography (developer : hexane : ethyl acetate = 10 : 0.5) and recrystallized from ethanol to obtain the titled compound (0.8 g)

Specific rotation [a]8° = + 41.0

Phase transition temperature by DSC and hot stage microscope-observation

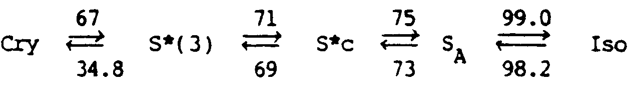

### Example 16

In a cell consisting of the ferroelectric liquid crystal placed between two ITO coated glass plates with thin rubbed polyimid film was packed the liquid crystal compound obtained in Example 1 and in the form of an isotropic phase to prepare a liquid crystal thin film cell.

The cell was slowly cooled with a rate of 0.1 to 1.0°C/min. until SA phase was oriented. Rectangular wave (± 30 V, 10 Hz) was applied to in order to detect electrooptical response by a polarizing microscope with photomultiplyer.

Electroclinic effect (b) which was optically responsible against applied field (a) was observed at the SA phase. The same effect as above was observed as to the compounds of examples 2-5 10, 11 and 13-15.

### Example 17

A liquid crystal cell prepared in the same manner as in example 16 was put in a polarizing microscope with photomultiplyer where two polarizing plate were crossed with a right angle so that an angle between a parallel axis of molecule and a polarizer was 22.50. The liquid crystal cell was slowly cooled with a rate of 0.1 to 1.0°C/min. to an S^{*}(3) phase. Further cooling showed a change as in Fig. 6 where triangular wave voltage (a) of ± 30 V, 10 Hz was applied to within the temperature range of 95.0 to 10.0 °C.

The figure shows change of percent transmission (c) from a dark phase at the minus range of applied voltage to a clear phase at the plus range via a medium phase at the zero range, and the corresponding peaks (b) of switching current peak. Three stable orientation statuses of liquid crystal molecules were confirmed. The same phenomenon as above were observed in the compounds of examples 2-5, 10, 11 and 13-15.

## Claims

1. A liquid crystal compound of the formula 1; 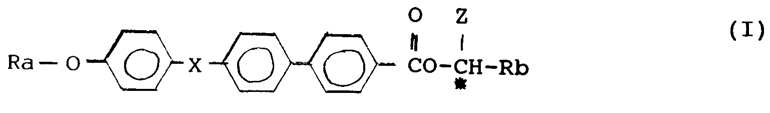 wherein Ra is an alkyl group having 1-20 carbon atoms, Rb is a normal alkyl group having 1-20 carbon atoms, X is a 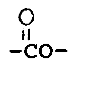 group or a 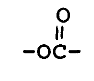 group, Z is a fluorine-containing alkyl group or a halogen substituted group thereof and ^{*} shows an optically active carbon.

2. A liquid crystal compound according to claim 1, which has the formula II

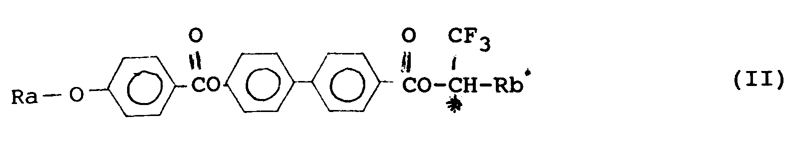

3. A liquid crystal compound according to claim 1, which has the formula III

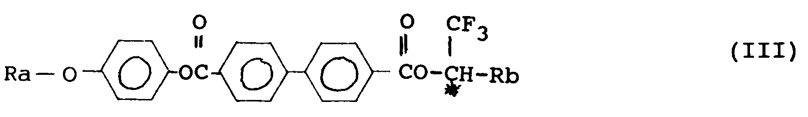

## Patentansprüche

1. Flüssigkristallverbindung der Formel (I) 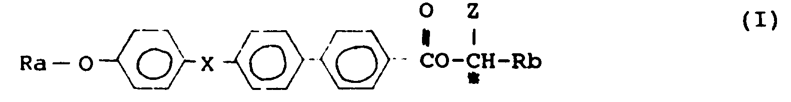 worin Ra eine Alkylgruppe mit 1 bis 20 Kohlenstoffatomen ist, Rb eine normale Alkylgruppe mit 1 bis 20 Kohlenstoffatomen ist, X eine 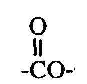 Gruppe oder eine 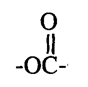 Gruppe ist, Z eine Fluor enthaltende Alkylgruppe oder eine halogensubstituierte Gruppe davon ist und ^{*} ein optisch aktives Kohlenstoffatom zeigt.

2. Flüssigkristallverbindung nach Anspruch 1, welche die Formel (ll) aufweist:

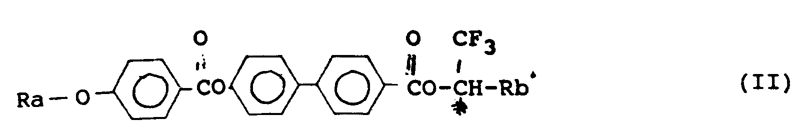

3. Flüssigkristallverbindung nach Anspruch 1, welche die Formel (lll) aufweist: 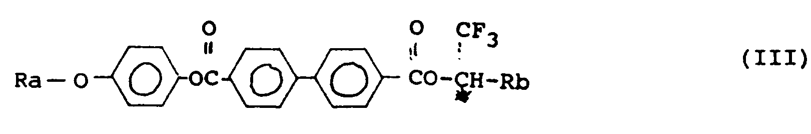 Revendications

## Revendications

1. Cristal liquide de formule 1; 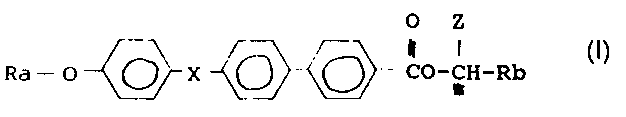 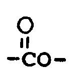 ou un groupe 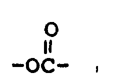 Z est un groupe alkyle fluoré ou l'un de ces groupes substitué par un halogène et ^{*} représente un carbone optiquement actif.

2. Cristal liquide suivant la revendication 1, qui a la formule ll

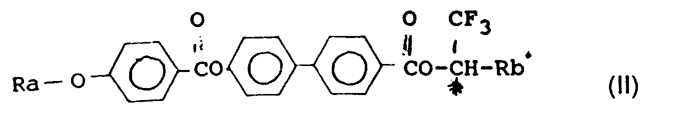

3. Cristal liquide suivant la revendication 1, qui a la formule III
